# EUROPEAN PATENT SPECIFICATION

(11) **EP 3 470 193 B1**
(45) Date of publication and mention of the grant of the patent: **24.01.2024**
(21) Application number: 18189881.8
(22) Date of filing: 06.04.2009
(51) Int. Cl.: B27N 3/06, B44C 5/04, B05C 19/04, B27M 3/04, E04F 15/10, B32B 38/06, B27N 7/00, B32B 21/08, B32B 21/02, B32B 5/02, B32B 5/26, B32B 5/30, B32B 21/06, B32B 21/10, B32B 21/12, B32B 21/14, B32B 29/02, B32B 29/04, B32B 37/24, B32B 3/26, B44C 1/24, E04F 13/08, E04F 15/02

(54) **METHOD OF MANUFACTURING A BUILDING PANEL**
VERFAHRUNG ZUR HERSTELLUNG EINES BAUPANEELS
PROCÉDÉ DE MANUFACTURE D'UN PANNEAU DE CONSTRUCTION

(30) Priority: 07.04.2008 SE 0800776; 13.11.2008 WO PCT/EP2008/065489
(43) Date of publication of application: 17.04.2019
(62) Divisional of application: 09731199.7
(73) Proprietor: Välinge Innovation AB, 263 64 Viken (SE)
(72) Inventor: PERVAN, Darko, SE-263 61 VIKEN (SE); JACOBSSON, Jan, SE-261 30 LANDSKRONA (SE); LINDGREN, Kent, SE-284 32 PERSTORP (SE); ZIEGLER, Göran, SE-263 62 VIKEN (SE); HÅKANSSON, Niclas, SE-263 65 VIKEN (SE); BOUCKÉ, Eddy, BE-8939 MENEN (BE)
(74) Representative: Välinge Innovation AB

(56) References cited:
- EP-A- 1 454 763
- EP-A- 1 507 664
- EP-A- 1 985 464
- EP-A- 1 997 623
- CH-A- 298 894
- DE-A1- 3 334 921
- DE-U1-202004 003 061
- JP-A- 11 291 203
- US-A- 3 673 020
- US-A- 3 846 219
- US-A- 4 131 705

## Description

### Technical field

The invention generally relates but is not limited to the field of wood fibre based building panels with a thin surface layer, preferably floor panels. The invention relates but is not limited to building panels with such surface layer and to equipment and methods to produce such panels.

### Field of Application of the Invention

The present invention is particularly suitable for use in floating floors, which are formed of floor panels with a wood fibre core and a thin decorative wear resistant surface. The following description of prior-art technique, problems of known systems and objects and features of the invention will therefore, as a non-restrictive example, be aimed above all at this field of application and in particular at floorings which are similar to traditional wood fibre based laminate floorings.

It should be emphasized that the invention can also be used in other applications as for example wall panels, ceilings, and furniture components and similar.

### Background

Wood fibre based direct pressed laminated flooring usually comprises a core of a 6-12 mm fibre board, a 0.2 mm thick upper decorative surface layer of laminate and a 0.1-0.2 mm thick lower balancing layer of laminate, plastic, paper or like material.

A laminate surface generally comprise two paper sheets, a 0.1 mm thick printed decorative paper and a transparent 0.05-0.1 mm thick overlay intended to protect the decorative paper from abrasion. The transparent overlay, which is made of α-cellulose fibres, comprises small hard and transparent aluminium oxide particles, which gives the thin surface layer a high wear resistance.

The printed decorative paper and the overlay are impregnated with melamine resin and laminated to a wood fibre based core under heat and pressure. The two papers have prior to pressing a total thickness of about 0.3 mm and they are after pressing compressed to about 0.2 mm.

Other common thin surface materials are wood veneer and foils, which are glued to a core.

The most common core material is fibreboard with high density and good stability usually called HDF - High Density Fibreboard with a density exceeding 800 kg/cm². Sometimes also MDF - Medium Density Fibreboard - with a density of 600-800 kg/cm² is used as core. Other core materials could also be used such as particleboard, plywood, and plastic materials and similar.

A balancing layer is generally applied on the rear side of the board in order to keep the panel flat when humidity changes.

HDF is produced as follows: Roundwood such as for example pine, larch or spruce are reduced to wood chips and then broken down into individual fibres in a refiner. The fibres are thereafter mixed with binders and then subjected to high pressure and temperature to form a board.

Floor panels with such thin surface layer are very cost effective compared to for example solid wood, stones and tiles. The major disadvantage is that properties related to deep surface structures, impact resistance and sound are inferior to the real products that they aim to copy.

Laminate floorings could be produced with very advanced designs where a printed pattern is coordinated with an embossed structure of the surface. The embossing is made during lamination when the surface is pressed against a steel sheet with an embossed structure.

The depth of the embossing is limited by the paper that could be damaged when the embossing is made with sharp edges or to a depth, which exceeds a few tenths of a millimetre. The embossing is mainly obtained by a compression of the overlay and the decorative paper. Embossed surfaces similar to a rough stone surface or a hand scraped wood surface or deep grooves that could be used to make bevels in a panel are not possible to make with the present pressing technology and with a reasonable cost structure maintaining the present technical properties and design.

Several methods have been used to increase the depths of the embossed surface structure.

It is known that one or several impregnated core paper sheets could be applied under the decorative surface paper and that deeper embossing up to 0.3 - 0.4 mm could be reached by a compression of the surface layer and the core paper. A similar method is described in WO 2004/067874. Such methods are expensive due to the fact that the pressure and pressing time must be increased from the normal level of 300-400 N/cm² to about 800 N/cm² and additional expensive material such as a core paper must be included in the panel under the decorative paper. Usually even the balancing layer has to be made thicker and this will increase the cost further.

It is also known that bevels and surface embossing could be made by a compression of the surface papers and the upper part of the core under the surface layer. Such a method is described in WO 03/078761 (Välinge Innovation AB) or WO 2006/066776. This method has several disadvantages. It could only be used in panels with a soft core such as MDF. This gives a low impact resistance and it is difficult to form high quality locking systems in such soft materials. In panels with a HDF core only limited and local embossing could be reached with conventional presses used in laminate production where the surface layer is formed and attached to a core (DPL technology). A considerable higher pressing force and longer pressing time is generally required to form surfaces similar to stone and rough wood surfaces.

Sufficient impact resistance can only be reached if thin surface layers are applied on a rather thick core with a high density. This means that the core material will be expensive and generally a board quality must be used that has better properties than what is needed for the overall stability of the panel and the strength of the locking system.

US 3,673,020 discloses a process for the manufacture of boards consisting of at least one layer. A first layer comprises a mixture of sawdust having a particle size below 1 mm and a second layer comprises a particle size above 1 mm. The layers are subjected to cold compression before applying a cover layer.

US 3,846,219 discloses a wood-chip board comprising a coarse chip layer and at least one fine chip layer arranged upon the coarse chip layer. A relieflike decorative layer is located on the fine chip layer. The fine chips are glued together in a gluing drum by means of a urea formaldehyde resin. Before applying a decorative layer and forming embossed portions, the fine chip layer and the coarse chip layer are pre-pressed or pre-compressed into a chip cake or briquet in a first process step.

US 4,131,705 discloses a structural laminate having a groove impressed on its surface. An adhesive is sprayed wood particles or flakes for forming a board. In a first pressing operation a board is formed and embossed portions are formed in a surface veneer in a subsequent embossing operation.

DE 3334291 discloses a process for producing an embossed multi-layer board comprising a carrier board, especially a chipboard, and a coating on at least one side made of a laminate board consisting of paper webs impregnated with cured resins. The document discloses that a layer of an adhesive is applied to the carrier board, and the laminate board is arranged on the adhesive layer. Alternatively, an adhesive foil may be applied to the carrier board.

### Definition of Some Terms

In the following text, the visible surface of the installed floor panel is called "front side", while the opposite side of the floor panel, facing the sub floor, is called "rear side". The sheet-shaped material that comprises the major part of a floor panel is called "core". When the core has a surface layer closest to the front side and preferably also a balancing layer closest to the rear side, it forms a semi-manufacture, which is called "floor board" or "floor element" in the case where the semi-manufacture, in a subsequent operation, is divided into a plurality of floor elements. When the floor elements are machined along their edges so as to obtain their final shape with the joint system, they are called "floor panels". By "surface layer" is meant all layers applied to the core closest to the front side and covering preferably the entire front side of the floorboard. By "decorative surface layer" is meant a layer, which is mainly intended to give the floor its decorative appearance. "Wear layer" relates to a layer, which is mainly adapted to improve the durability of the front side.

By "horizontal plane" is meant a plane, which extends parallel to the outer part of the surface layer. By "horizontally" is meant parallel to the horizontal plane. By "up" is meant towards the front face and by "down" towards the rear face.

### Summary of the Invention

Wood fibre based floorings with thin surface layers similar to laminate and wood veneer floorings could capture a considerably larger market share if deep embossing and increased impact resistance could be reached in combination with a cost effective production method.

An overall objective is to provide a building panel, preferably a floor panel, with a thin surface layer, which has a more attractive surface design and/or better surface properties and/or cost structure than present known floorings with conventional thin surface layers. A specific objective of an embodiment of the invention is to provide a method to produce a floor panel with new attractive design features such as deep embossing which preferably could be combined with high impact and wear resistance, improved sound properties and cost effective production.

The invention therefore provides a method of manufacturing a building panel as defined by the appended claims.

The problem has been solved, contrary to the known methods where several paper layers or a core is compressed, with a method of manufacturing a building panel which comprises a sub layer between a surface layer and a core. This sub layer comprises or consists of small individual fibres and an uncured binder and is applied on the core as a powder. The small fibres are not bonded to each other as for example fibres in paper layers and a HDF core, and could easily be compressed, formed and displaced in all directions during a part of a pressing operation until the binder cures. The uncured sub layer behaves similar to a paste or a liquid substance and creates a uniform counter pressure in all parts under the surface layer even in surface parts with deep and sharp embossing. The result is an improved and easier forming with lower pressing force and improved surface quality. A thin surface layer will usually not be damaged, significantly or at all, during pressing and the sub layer will after curing provide a strong base for the thin surface layer. Such a base could be stronger than the core and improved impact resistance could be reached.

According to a first aspect a production method is provided to produce a floor board comprising a wood fibre based core, a thin surface layer and a sub layer between the surface layer and the core. The sub layer comprises or consists of wood fibres and a binder. The method comprises the steps of:
- mixing particles comprising wood fibres and an uncured binder for the sub layer,
- applying the wood fibres and the uncured binder for the sub layer on the core,
- applying a surface layer on the wood fibres and the uncured binder,
- bringing the core (6), the surface layer (5), the wood fibres (14) and the uncured binder (19) under increased pressure and temperature and forming them to a floor board (1) by curing the binder (19).

The first aspect offers the advantage that the sub layer could be produced with higher density than the core and this could give the floor panel a high impact resistance even in the case when the surface layer is thin or the core rather thin or soft. A core material could also have a rather uneven core surface, which could be filled by the sub layer. This makes it possible to use for example particleboard or un-sanded HDF board in a DPL production based on one decorative paper and one overlay.

The wood fibre based sub layer is very cost efficient compared to for example a core paper. The curing time and the required pressure force in the press could be the same as for conventional laminate floorings.

The sub layer could comprise colour pigments with a different colour than the surface layer and decorative grooves, where the surface layer is removed and the sub layer is visible, could be formed.

The sub layer could also comprise particles, for example cork particles, which could give the floor panel improved sound properties and flexibility.

A cork layer could be used in combination with known surface materials such as laminate, resilient surfaces, fibre based surfaces, wood, wood veneer, linoleum, cork veneer and similar. Several advantages could be reached. A thin surface layer, for example a wood veneer could be applied, prior to pressing, on a sub layer comprising cork particles and binders. Pressing could take place against a press plate, which could create a deep embossing, or deep grooves. The thin surface layer will be formed and laminated to the sub layer. The thin surface layer will not be damaged since the cork particles will be compressed and formed according to the structure of the press plate. This forming technology could also be used in a panel where the sub layer comprises wood fibres or other type of fibres that could be formed by pressing.

According to a preferred embodiment of the first aspect, the method further comprises the step of pressing the surface layer with an embossed pressing matrix such that the surface layer obtains upper portions and embossed portions which are lower than the upper portions by shaping of the sublayer The embossed portions are preferably obtained by compression of the sublayer located under the embossed portion and/or by shifting fibres located under the embossed portion to the upper portions.

In a preferred embodiment a part of the sub layer is more compressed under an embossed portion than a part of the surface layer located under an upper portion.

An embodiment of the first aspect offers the advantages that the sub layer during the initial stage of the pressing is uncured and soft and comprises particles, which easily could be displaced during pressing. Very deep embossing could be formed with normal pressing force. Deep surface embossing of for example up to 0.5 mm and even more could easily be reached with a surface layer comprising a decorative paper, a foil, wood veneer and similar. The embossing is preferably formed when the surface is pressed against an embossed steel sheet or belt or a paper matrix.

A major advantage is that deep embossing of the surface layer and the sub layer could be formed without any compression of the core material. A compression of the core material is however not excluded. Such a compression of the core could take place if the sub layer for example is very thin.

The sub layer could comprise fibres and binders, which are suitable for a second pressing step where further embossing and forming could be formed in a press or with roll forming.

The thin surface layers should preferably have a thickness before pressing of about 0.3 - 1.0 mm. Thinner layers with a thickness of 0.1-0.2 mm are not excluded and very deep embossing could be formed with such thin surface layers of for example foils and papers. The surface layer could also be a print, paint or coating that is applied prior or after the pressing. Thicker layers of more than 1 mm could also be used, for example linoleum, resilient floor surfaces and similar.

The production could be made in continuous or discontinuous presses. According to another preferred embodiment of the first aspect a surface layer is provided which comprises a homogenous mix of wood fibres, wear resistant particles binders and colour pigments. Such surface layer is below referred to as Solid Laminate Surface Layer. The surface layer preferably comprises natural resins, e.g. lignin, of bio based material, e.g. from wood. The surface layer and the sub layer are in this embodiment rather similar regarding material properties and material composition. The surface layer comprises however wear resistant particles for example aluminium oxide and colour pigments. The binders and the fibres could be similar in both layers. The size of the fibres and the resin content could however vary. Very deep surface embossing and bevels of more than 1 mm depth could easily be formed.

According to a second aspect a building panel is provided comprising a thin surface layer, a wood fibre based core and a sub layer between the surface layer and the core. The sub layer comprises wood fibres and a binder and the average fibre length in the sub layer is shorter than the average length of the wood fibres in the core.

The panel could have all surface layers mentioned above.

Overlay, decorative papers, core papers and HDF are made of individual fibres with a thickness of a few hundreds of a millimetre and a length of several millimetres, generally in the range of 3-5 mm. This corresponds to a length/thickness ratio (LTR) of about 100. The sub layer according to the second aspect is formed of wood fibres that are mechanically cut into wood powder fibres. The average length of the fibres should preferably not exceed about 1 mm and this fibre length is considerably shorter than the length of the fibres in core. The LTR is in the region of about 30 or smaller. It is even more preferred that the fibres are smaller than 0.5 mm. Very high quality sub layers have been obtained with very small fibres with an average length of 0.1 - 0.3 mm and an average LRT of less than 10.

Short fibres are easier to apply on a core in well-defined layers and they provide a soft sub layer, which is easy to form and compress. They are easier to mix with resins especially is such resins are in dry powder form. Another advantage is that recycled and short fibres, which are not possible to use in paper production due to low strength, could be used to form a strong sub layer.

According to a preferred embodiment of the second aspect a building panel is provided, wherein the surface layer comprises upper portions and embossed portions lower than the upper portions wherein a part of the sub layer is more compressed under an embossed portion than under an upper portion.

It could be mentioned as a non-restricting example that the sub layer could comprise for example about 70-85% (weight) wood fibres and about 15-30% melamine resin. The layer could have a thickness, which is for example in the range of 0.1 mm - 1 mm or even more. Other combinations are of course also possible. The mixture should be adapted to the desired properties and cost structures. The binders contribute in general to give the surface a high impact and moisture resistance but they are rather costly. Other hard and heavy particles such as aluminium oxide or stone powder could be included in the sub layer in order to increase the density and to improve the impact resistance.

It could be mentioned as a non-restricting example that the solid laminate surface layer could comprise for example about 25% (weight) aluminium oxide, about 25% wood fibres, about 25% melamine resin and about 25% colour pigments. The surface layer could have a thickness, which is for example in the range of 0.1 mm - 3 mm or even more. Other combinations are of course also possible. The melamine part could vary for example between 10 - 35%. The content of the colour pigments could be very low for example only about 0.1-5%. Wear resistant particles could be in the same range and could for example vary from a few percent to 35% and even higher. The mixture should be adapted to the desired properties and cost structures.

The pressure is preferably about 300N - 800N/cm² and the temperature could be 120-220 degrees C. The pressing time could vary for example from 20 seconds to 5 minutes. It is possible to use very short pressing times, for example about 10 seconds or shorter, especially in embodiments where a rather thin surface and sub layers are applied on an HDF core before pressing. Thermoplastic binders such as PVC, PE, PP, etc could also be used.

It is preferred in all embodiments to use a dry process to form the sub layer and the solid laminate surface layer. The different materials and mixtures of different materials such as fibres, wear resistant particles, binders and colour pigments are distributed and scattered in a dry form. Scattering could be made with several stations comprising embossed or engraved rollers and brushes that could apply one or several layers of dry material.

A panel could of course be formed without a surface layer. Only a sub layer as described above could be applied on a core. The sub layer, which in this case has a surface of wood fibres and binders, could be made with a flat or embossed structure. A final decorative surface could be applied for example as a print in the factory or as a paint or coating or similar by the consumer. The panel could also be used without any additional decorative layer over the sub layer. New types of core materials could also be produced with for example a core and a sub layer applied on the core. The advantage is that core materials could be used which for example is not suitable to use in wood and laminate flooring. They could for example be too soft or difficult to laminate or glue. The sub layer could however create a strong and suitable base for the application of a surface layer. More cost effective core materials or core materials with other properties than HDF could be used. Decorative sub layers make it possible to form decorative grooves or bevels.

All preferred embodiments with and without wear resistant particles could be used to make panels, which could be applied vertically on a wall as wall panels in interior or exterior applications. Such panels could have a mechanical locking system on long edges that is possible to lock with angling and optional on short edges a locking system with for example a flexible tongue that allows vertical folding as described in for example WO 2006/043893.

A third aspect is floor production equipment which comprises a roller with needles or engraved protruding portions and a brush for applying dry materials comprising small wood fibres and binders and preferably wear resistant particles and colour pigments on a board material. The amount of needles or engraved protruding portions should be adapted to the dry materials and to the type and size of fibres, which are applied on the board material, to obtain an even flow of fibres and a clean roller after it has passed the brush. In a preferred embodiment the amount of needles or the engraved protruding portions is more than about 20 per cm² and most preferably in the range of about 40 - 120 per cm². This equipment could also be used in the production of WFF floor board as described in PCT/EP2008/065489.

### Brief Description of the Drawings

- Figs 1a-1d: illustrate a known floor panel with an embossed surface.
- Figs 2a-e: illustrate a floor panel
- Figs 3a-d: illustrate a production method to apply particles on a core.
- Figs 4a-c: illustrate a panel surface and production method to form an embossed surface
- Figs 5a-c: illustrate panels
- Figs 6a-d: illustrate a panel surface with decorative grooves and bevels.
- Figs 7a-e: illustrate a method to form an in register embossed surface.

### Description of Embodiments of panels

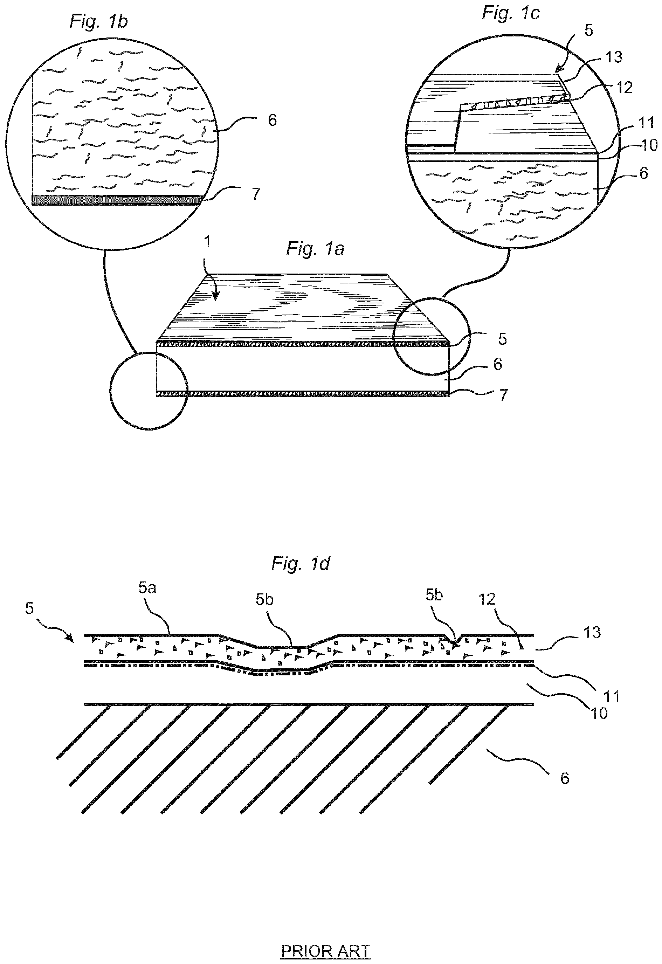

Figure 1a shows a laminated floor panel 1 according to known technology comprising a surface layer 5, a core 6 and a balancing layer 7. Figure 1c shows the surface layer 5. It has an upper wear layer 13 of a transparent material with great wearing strength. Such a wear layer comprises generally a transparent paper impregnated with melamine resin and with aluminium oxide particles 12 added. A decorative layer 10 comprising paper with a printed pattern 11 is impregnated with melamine resin and placed under this transparent wear layer 13. The wear layer 13 and the decorative layer 10 are laminated to the core, generally a fibre based core such as HDF, under pressure and heat to an about 0.2 mm thick surface layer 5. Figure 1b shows the balancing layer 7 that generally also is a melamine-impregnated paper. This balancing layer keeps the floor panel flat when humidity varies over time. The transparent wear layer is generally 0.05 - 0.10 mm thick.

Figure 1d shows a laminate flooring with an embossed surface layer according to known technology. The surface layer 5 comprises upper portions 5a and embossed portions 5b, which are compressed and located lower than the upper portions. The embossing is made to a depth of about 0.1 mm and only the overlay 13 and the decorative paper (10) are compressed.

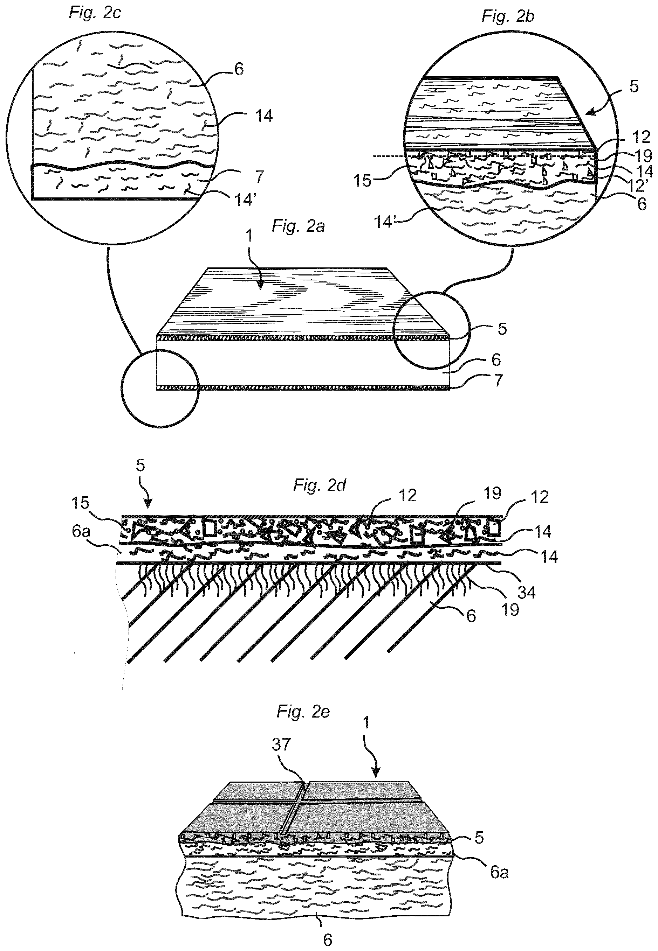

Figures 2a -2d shows a floor panel 1 according to one embodiment where the surface layer 5 is a Solid Laminate Surface Layer. A panel 1 is provided with a wood fibre based core 6, a non-transparent decorative surface layer 5 and preferably a balancing layer 7 as shown in Figure 2a. Figure 2b shows the surface layer 5 that comprises wood fibres 14, small hard wear resistant particles 12, 12' and a binder 19. Preferably the wood fibres are unrefined and comprise lignin. Such wear resistant particles (12,12') are preferably aluminium oxide particles. Other suitable materials are for example silica or silicon carbide. Diamond crystals or powder, could also be added into the surface layer. In general all materials with a hardness of Rockwell C hardness HRC of 70 or more could be used and they do not have to be transparent. A mixture of two or more materials could be used.

This embodiment offers the advantage that the wear resistant surface layer 5 could be made much thicker than in known floor panels. The thickness of the wear resistant and decorative surface layer could vary from for example about 0.1 mm to for example about4 mm or even more. Wear resistance with maintained decorative properties could be extremely high, for example in the region of 100,000 revolutions or more in a surface layer that is about 1.0 mm thick.

A preferable binder is melamine or urea formaldehyde resin. Any other binder, preferably thermosetting resins, could be used Figure 2c show that a balancing layer 7 comprising preferably wood fibres 14' and a binder could be provided on the lower side of the floor panel. The fibres, the binder and also the pressing temperature should be adapted in an appropriate way to balance the surface layer and to keep the panel flat. The balancing layer 7 is preferably pressed with a higher temperature for example 5- 20 °C higher than the surface layer 5

It could be mentioned as a non-restricting example that the surface layer could comprise of for example 25% (weight) aluminium oxide, 25% wood fibres, 25% melamine resin and 25% colour pigments. The surface layer could have a thickness, which is for example in the range of 0.1 mm - 3 mm or even more. The most preferable thickness is 0.5 - 1.5 mm.

The surface layer comprises preferably wood powder with particle which are in the range of about 0.1 -0.3 mm or even smaller.

A particularly high quality surface layer 5 could be achieved if the wood fibres, which are mixed with the binding agent, colour pigments and wear resistant particles, are already pre coated and fully or partly pre cured with a binder, for example a melamine or urea formaldehyde resin, or pressed and then separated mechanically into wood fibre powder or wood fibre chips which are preferably smaller and more compact than the original wood fibres. Such a fibre composition is especially well suited to be mixed with wear resistant particles and could create a well defined base for the printing operation with wear resistant particles evenly spread over the whole surface layer. Such coated fibres could be obtained from recycled HDF.

Figure 2d show a panel where the surface layer 5 has been formed on a core 6 that has been produced in a prior separate operation, for example a HDF panel. There is a distinct connection 34 between the core 6 and the surface layer 5. The connection 34 could be very strong since binders 19 from the surface layer 5 penetrate into the upper part of the core 6, especially if the core is HDF or a wood based panel such as for example particleboard. Different binders or binder contents could be used in the upper and lower parts of the surface layer 5. A sub layer 6a is applied between the surface layer 5 and the core 6. This sub layer 6a could be produced in the same way as the Solid Laminate Surface Layer described above and the same material compositions could be used except for the fact that in some embodiments wear resistant particles and colour pigments are not included. Such materials could however be included in the sub layer 6a in order to for example create decorative grooves or to increase the impact resistance. The binders 19 in the sub layer 6a could be specially adapted to penetrate and reinforce the upper parts of the core 6 in order to for example increase the moisture resistance of the upper parts of the core.

Figure 2e shows that pressing a matrix to the surface 5 could create grooves 37, bevels, grout lines and similar. Such embossing could be made much deeper than in traditional laminate floorings where the paper will be damaged. Embossing with a depth of for example 1-2 mm or even more could easily be obtained. The production cost could be decreased if the thickness of the surface layer 5 is reduced and replaced with a sub layer 6a that only comprises wood fibres and binders. Such sub layer could increase impact resistance, reduce sound and create a layer that could be compressed and cured during pressing such that deep surface structures could be obtained which are deeper than the thickness of the Solid Laminate Surface Layer.

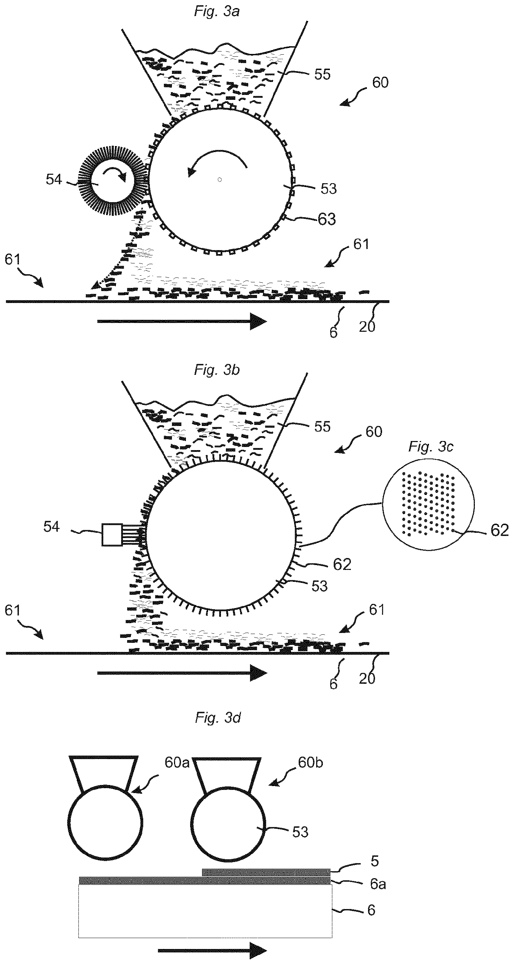

Figure 3a show a scattering station 60 which could be used to distribute dry materials in layers in order to form a Solid Laminate Surface Layer or a sub layer 6a. Fibres, wear resistant particles, binders in powder form and colour pigments in powder form could for example be mixed and applied into an container 55 that is in contact with an engraved roller 53. This roller 53 brings during rotation the mixed material 55 into contact with a brush roller 54 and the material 55 is applied on a conveyor belt 20 or on another layer or board material. Liquid resins or water 61 could be applied on the core or sprayed over the fibres in order to stabilize the fibre layer prior to pressing. This facilitates the pressing and the application of a surface layer over the sub layer. It is preferred to use water containing for example 1% weight content of a wetting agent for example BYK-348 from BYK Chemie which is applied on an core. 10-100g/m² could be used. 10-20 g/m² is preferred. Other types of wetting agents can also be used, as e.g., soap and the like.

Small wood fibres which are 1.0 mm or shorter and which are mixed with other dry materials such as melamine powder, colour pigments and small wear resistant particles as described above are very difficult to distribute in well defined layers. Conventional scattering equipment cannot be used. This problem could be solved if the surface of the roller 53 comprises a large amount of thin needles or spikes, which are preferably made of a strong and polished metal. The amount of needles or spikes should be adapted to the type and size of fibres, and to the other dry materials, which are applied on the board, to obtain an even flow of fibres and a clean roller after it has passed the brush. Further parameters, which should be considered, are the diameter and the length of the needles and the spikes. This is shown in figure 3b. The length of the needles is preferably about 1 mm and the thickness about 0.5 mm. Very good results have been reached with rollers which comprises about 80 needles/cm², needle diameters of 0.5 mm and needle lengths of 0.8 mm, as shown in figure 3c. 40-120 needles/cm² could also be used depending on the size of the powder particles and the material composition. The roller 53 has preferably a diameter of about 100 - 300 mm. It is preferred to use an oscillating brush 54 that moves along the length of the roller 53. Scattering equipment with such rollers could be used to apply materials in powder form and to create Solid Laminate Surface Layers and sub layers as describe in all preferred embodiments. As a non-limiting example it could be mentioned that 400 gr/m2 of powder material could be applied with a speed of 10 m/min. This corresponds to a pressed sub layer of about 0.2 mm. Lower speed and/or several scattering stations could be used if thicker layers are required.

An embodiment provides equipment and a method to produce a floorboard by applying dry materials comprising small wood fibres and binders and preferably wear resistant particles and colour pigments on a board material. The equipment comprises a roller with needles or engraved protruding portions and a brush. In a preferred embodiment the amount of needles or the engraved protruding portions is more than about 20 per cm² and most preferably in the range of about 40 - 120 per cm².

Figure 3d shows that several scattering stations 60a, 60b could be used to apply one or several layers 5, 6a on a core 6.

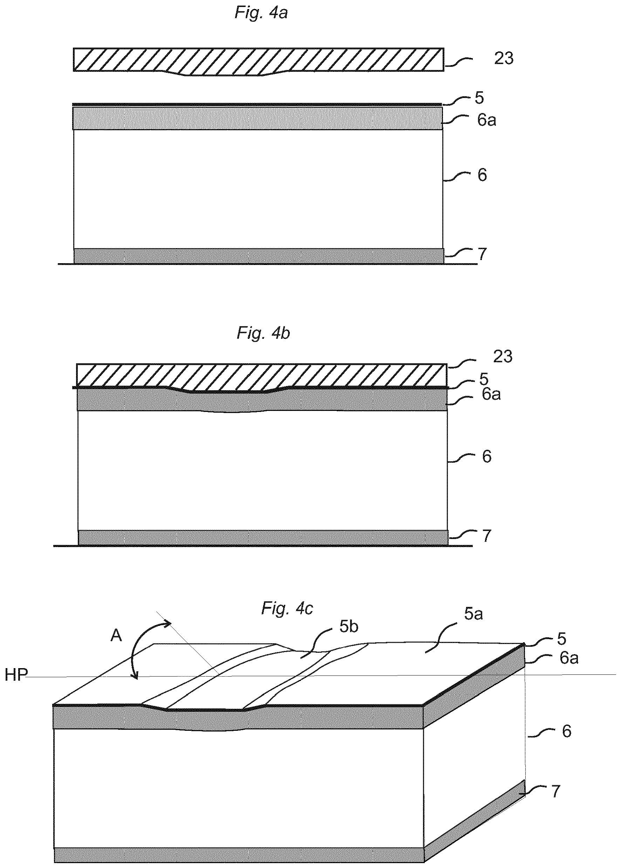

Figures 4a-c show how a thin surface layer 5, preferably a wood veneer layer, a printed paper with an overlay or a foil with a thickness of for example 0.3-1.0 mm, could be formed with deep structures that give an appearance similar to solid wood. Figure 4a shows how a floorboard could be produced. A thin surface layer 5 is applied on a sub layer 6a comprising for example cork or wood fibres mixed with a binder, preferably a thermosetting binder. The sub layer 6a is applied on for example a wood fibre based core, preferably a HDF core. Other core materials could be used such as particleboard, plywood, plastic materials etc. A balancing layer 7 could also be applied to the core 6. Figure 4b show how the core and the layers are pressed together. This pressing forms the sub layer 6a and the surface layer 5, which are cured and connected to each other under heat and pressure. Very deep embossing could be obtained and a rough surface similar to hand scraped solid wood could be created with a thin wood veneer. The sub layer could be used to improve the properties of the surface layer, for example sound absorption and impact resistance.

This sub layer comprises or consists of small individual fibres and an uncured binder and is applied on the core as a powder. The small fibres are not bonded to each other as for example long fibres in paper layers and a HDF core, and could easily be compressed, formed and displaced in all direction during the initial part of a pressing operation until the binder cures. The uncured sub layer 6a behaves similar to a paste or a liquid substance and creates a uniform counter pressure in all parts under the surface layer even in surface parts with deep and sharp embossing.

The conversion from a layer of uncured unbonded fibres to a solid layer could be described by the following process:
1. A first step takes place when a heated press plate, or a steel belt in case a continuous press is used, is in initial contact with the surface layer and the protruding portions of the pres plate/belt are deforming parts of the surface layer. The sub layer material, which is in powder form, is partly displaced horizontally but also vertically upwards towards the cavities of the press plate/belt where parts of the surface layer could be pressed upwards into the cavities. A locally increased compression of the core under the protruding portions of the press plate/belt could take place if the sub layer is thin or if the initial pressure is high or if the embossing is deep. Such a compression of the core could however be avoided if thicker sub layers are used.
2. The sub layer material will be converted to a paste form in a second step when heat increases and the melamine binder becomes liquid. The pressure is substantially evenly distributed in the whole surface layer and sub layer. The pressure could now be increased and this will not cause any increased local compressions of the core or the surface layer.
3. A curing of the binders will take place in the final third step when heat and pressure reaches the maxim level and the sub layer will obtain its final properties related to shape and density.

Materials, material compositions, heat and pressure could be adapted in order to form a high quality surface even in the case when deep and sharp embossing in combination with thin surface layers are used as a surface in a building panel. According to one preferred embodiment a panel with a HDF core and surface layer is provided comprising a decorative paper, an overlay and an embossed structure with a depth that exceeds the thickness of the surface layer and wherein the upper part of the HDF core is flat and essentially parallel with the horizontal plane HP.

The result is an improved and easier forming with lower pressing force and improved surface quality. A thin surface layer will usually not be damaged, significantly or at all, during pressing and the sub layer will after curing provide a strong base for the thin surface layer. Such a base could be stronger than the core and improved impact resistance could be reached. Very deep embossing could be obtained with a surface layer that comprises conventional decorative paper and overlay used in conventional laminate floorings. The pressure time and the pressing force could also be similar to conventional laminate production. Conventionally a lamination pressure of about 400 N/cm² is used. Embossing depth where the compressed portions 5b are about 0.3- 1.0 mm below the upper portions 5a can be made even when the surface structure comprises rather sharp embossed portions, for example with an angle exceeding 45 degrees against the horizontal plane HP, as shown in figure 4c. Even deeper structures could be made but such structures are generally not suitable for floorings since they are difficult to clean and to place furniture on. Such deep embossing could however be used in wall panels and to form bevels at the edges of a floor panel.

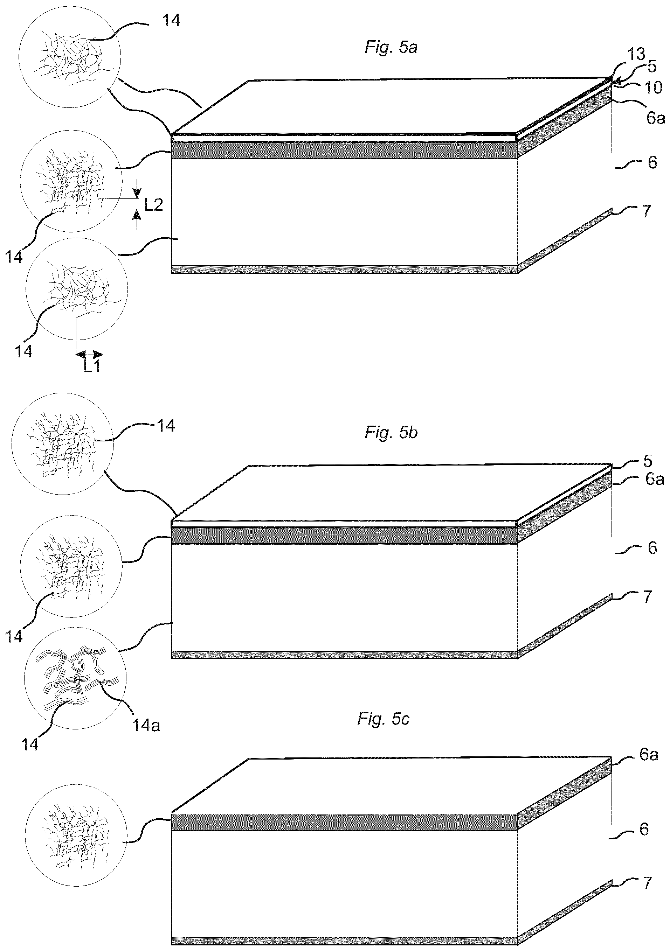

Figures 5a and 5b show fibre structure of floor panels according to preferred embodiments. Fig 5a shows a floor panel with a HDF core 6.

Such a core comprises individual fibres with a thickness of about 0.03 mm and a length of about 2-5 mm. The surface layer 5 comprises a decorative paper 10 and an overlay 13, which comprises individual fibres of the same size as the core 6. The sub layer 6a comprises fibres, which are mechanically cut and essentially shorter. They have preferably an average length that does not exceed 1 mm. This means that the fibres in the sub layer have an average length which is 50% or less than the average length of the wood fibres in the core. Shorter fibres are even more preferred, for example of an average size of 30% of the length of core fibres or less. Very compact and high quality layers have been obtained with fibres, which have a length of only 0.1-0.3 mm. Such micro fibres are very suitable to form high quality Solid Laminate Surface Layers. Short fibres are easier to apply on a core in well-defined layers and they provide a soft sub layer, which is easy to form and compress to a solid and compact layer. They are easier to mix with resins especially if such resins are in dry powder form and a high internal bonding and moisture resistance could be reached. Another advantage is that recycled and short fibres, which are not possible to use in paper production due to low bonding strength, could be used to form a strong sub layer in a floor panel. Long fibres similar to fibres used in HDF and paper could be used to form a sub layer. Such a layer will however give a much lower quality and the production will be more complicated and costly.

Figure 5b shows a panel with a particleboard core 6. Such a core consists of small wood chips 14a comprising several fibres 14 which are connected with glue to a board. The chips could have a thickness of 0.5-1.0 mm and a length of 2-4 mm. Particleboard is softer and has a lower density than HDF. The surface layer 5 is a Solid Laminate Surface Layer comprising short fibres. The sub layer comprises the same fibre size as the surface layer. The short fibres 14 in the two upper layers 6a, 5 could provide a very hard surface with high impact resistance even in the case when the core 6 is made of a rather soft material. High impact resistance and a smooth surface layer similar to an HDF based panel can also be reached with a core of particleboard and with surface layers comprising paper or foil provided that the sub layer is compact and has a sufficient thickness to over bridge the irregularities of the soft core surface under the sub layer.

Figure 5c shows that a panel could be made which only has a core 6 and a sub layer 6a. A balancing layer 7 could also be provided if needed. Such a panel could be used as composite core material in laminate and wood flooring production. Several sub layers 6a with different properties regarding density, moisture, sound, flexibility etc. could be used. The sub layer should preferably have different materials or different material properties than the core. Different combinations of fibres, fibre size, density and binders could be used to make a cost effective core with high quality.

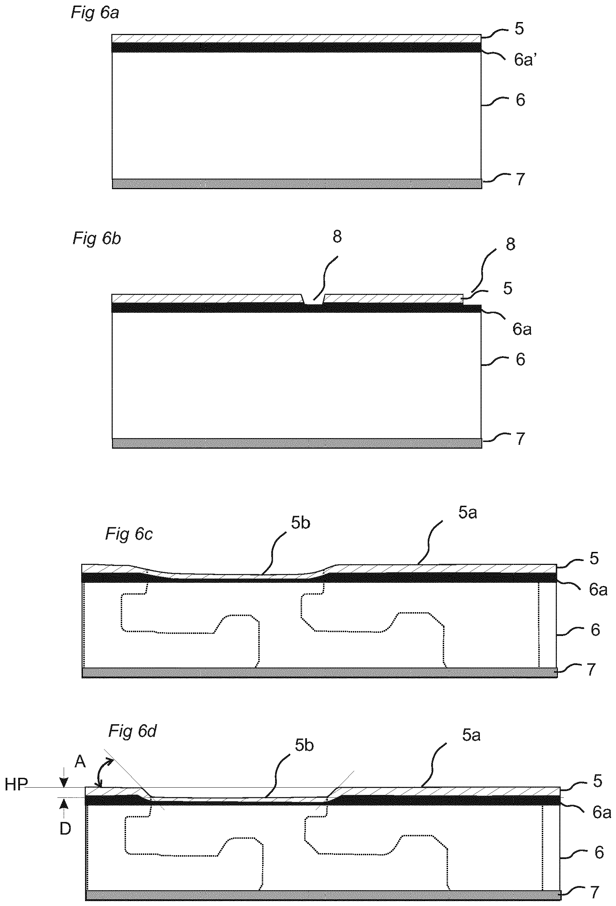

Figure 6a shows a panel with surface layers 5, and a sub layer 6a with preferably different design or structure. Decorative grooves 8 could be formed to a depth such that the lower sub layer 6a is visible, as shown in Figure 6b. Very accurate and attractive design effects could be obtained. Figure 6c shows that embossing could be made in connection with pressing and that such embossing 5b could form bevels at the edges of a floor panel when the floorboard and a floor panel is formed with mechanical locking systems. Figure 6d shows that sharp embossing with an angle A of 45 degrees and more, extending upwardly from the horizontal plane HP, could be made. 45-60 degrees is possible and even 90 degrees could be reached. Such deep embossing could be combined with for example a surface layer 5 comprising paper sheets and with a depth D that exceeds the thickness of the surface layer 5 and a core surface, which is flat and parallel with the horizontal plane HP. No local compression of the core 6 is needed and this simplifies the production and allows deeper embossing. Such embossing could be made with a depth D that is 2 times or even three times deeper than the thickness of the surface layer 5.

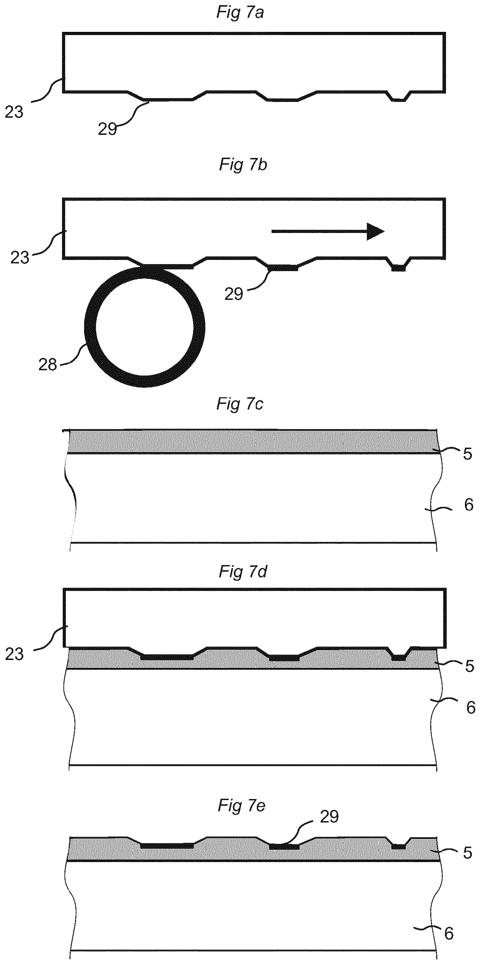

Figures 7a-e show a preferable method to create a surface layer with an in register embossed surface (EIR), especially in a flooring according to embodiments of this disclosure. An embossed pressure matrix 23 is provided preferably as a sheet, a structured paper, a roller, a belt and similar with a surface that comprises embossed protrusions 29 as shown in Figure 7a. A decorative material for example paint or coloured fibres or similar is applied on the protrusions 29 with an application device for example a rubber roller 28 or similar. A surface layer 5 comprising uncured fibres and binders is provided as shown in Figure 7c and the pressure matrix 23 is pressed against the surface layer 5, as shown in Figure 7d. The decorative material 29 will be positioned at the lowest surface portions and a perfect in register embossing will be obtained as shown in Figure 7e.

This method is very suitable for all types of surfaces where decorative parts could be included in the surface during the final forming and curing of the surface in a pressing operation. Paint could be used that during pressing penetrates into the basic fibre structure. A print could be applied into a fibre layer, on an overlay or decorative paper or on a wood veneer.

A Solid Laminate Surface layer could be formed in several alternative ways. It is possible to produce such surface layer without colour pigments or wear resistant particles. A thermosetting binder, for example melamine, could in some embodiments be sufficient, if it is for example combined with fibres, preferably wear resistant fibres, that could be used to replace the wear resistant particles. Plastic fibres or granulates, for example nylon fibres or mineral fibres such as glass fibres, could improve the wear resistance considerably in a basic surface layer material that also comprises wood fibres.

It is also possible to replace wood fibres in the Solid Laminate Surface Layer completely or partly with other fibres such as vegetable fibres for example jute, linen, flax, cotton, hemp, bamboo, bagasse and sisal and to use wear resistant particle, for example aluminium oxide, to create a vegetable fibre based wear resistant surface layer.

Wood fibres in the sub layer could also partly or completely be replaced with plastic fibres or granulates, mineral fibres or vegetable fibres in the same way as described above for the surface layer and the same type of materials could be used.

The sub layer could also be used to produce for example a composite laminate similar to a conventional high-pressure laminate. Such conventional laminates consists of one, or several phenol impregnated core papers under a melamine impregnated decorative paper. The laminate is generally glued to a board. All or some of the core papers could be replaced with a sub layer comprising small wood fibres and binders as described in any of the preferred embodiments above. The mix of wood fibres and binders could for example be applied on a core paper. The fibres in the mix are preferably smaller than the fibres in the core paper or the decorative paper. A decorative paper could be applied on the mix of wood fibres and binders. Wood fibres, binders, core paper and decorative paper could be subjected to heat and pressure until the binder cures. Such a composite laminate could also be produced without a core paper. A fibre layer could be applied directly on a release paper, a steal sheet or most preferably on a steal belt of a continuous press.

A composite laminate as described above is more cost efficient than conventional laminates. Deeper embossing, increased impact resistance and flexibility and a better sound level could for example be reached if one or several core papers are replaced with a wood fibre layer. Decorative grooves and bevels could be formed if the sub layer comprises colour pigments. Such a sub layer of a composite laminate could have a thickness of for example 0.1 - 1.0 mm and the total thickness of the solid laminate could be about 0.2 - 1.2 mm. Ticker layers of for example 1-3 mm or more are also possible.

The composite laminate could for example be glued to a board and used for example as a floor panel, wall panel or a furniture component.

All surface layers as described in the preferred embodiments could be used to form a composite layer in the same way as described above for the composite laminate. A wood veneer, preferably with a thickness of 0.3 - 1.0 mm, could for example be used in combination with a sub layer to produce a 2-4 mm veneer composite layer, which could be applied on a lamella core and used in an 12-15 mm engineered parquet floor in order to replace a 3 mm parquet strip of solid wood. Foils and Solid Laminate Surface Layers could be combined with wood fibres and binders in order to form a composite layer. All of the above described embodiments could be used individually or in combinations.

Using an overlay with wear resistant particles is not excluded and this could increase the wear resistance of a wood veneer. Dry and wet overlays, which are produced by production methods where for example thermosetting resins in dry or wet form are mixed with aluminium oxide, without any fibres could also be used. Aluminium oxide particles mixed with melamine powder could for example be applied on a wood veneer prior to pressing and a wear resistant surface could be obtained without any surface coating after pressing.

## Claims

1. A method of manufacturing a building panel (1) comprising a wood fibre based core (6) a thin surface layer (5) and a sub layer (6a) between the surface layer and the core, the sub layer comprises wood fibres (14) and a binder (19), wherein the method comprises the steps of:
• mixing particles comprising wood fibres and an uncured binder for the sub layer,
• applying the wood fibres and the uncured binder as a powder for the sub layer on the core, wherein the sub layer (6a) comprises fibres with an average length (L2) which is shorter than the average length (L1) of the wood fibres in the core (6),
• applying a surface layer on the wood fibres and the uncured binder, wherein said wood fibres (14) are not bonded to each other,
**characterized in that** it further comprises the step of:
• bringing the core (6), the surface layer (5), the wood fibres (14) and the uncured binder (19) under increased pressure and temperature and forming them to a building panel (1) by curing the binder (19) such that the surface layer (5) comprises upper portions (5a) and embossed portions (5b) lower than the upper portions, wherein a part of the sub layer (6a) is more compressed under an embossed portion (5b) than under an upper portion (5a).

2. The method of manufacturing a building panel according to claim 1, wherein the sublayer (6a) is formed of wood fibres mechanically cut into wood powder fibres.

3. The method of manufacturing a building panel according to any of the preceding claims, wherein the average length of said wood fibres of the sub layer is no more than 1 mm, preferably no more than 0.5 mm.

4. The method of manufacturing a building panel according to any of the preceding claims, wherein said fibres of the sub layer are mixed with resin in dry powder form.

5. The method of manufacturing a building panel according to any of the preceding claims, wherein said sub layer further comprises aluminium oxide or stone powder.

6. The method of manufacturing a building panel according to any of the preceding claims, wherein said surface layer has a thickness in range of 0.1mm-3 mm.

7. The method of manufacturing a building panel according to any one of claims 1-6, wherein said surface layer is a solid laminate surface layer, and wherein said sublayer and said solid laminate surface layer are formed by a dry process, wherein said layers are distributed and scattered in a dry form.

8. The method according to claim 7, wherein said scattering in performed with a plurality of stations, comprising embossed or engraved rollers and brushes.

9. The method according to claim 8, wherein one or more layers of dry material are applied with said embossed or engraved rollers and brushes.

10. The method of manufacturing a building panel according to any of the preceding claims, wherein said building panel is a floor panel or a wall panel.

11. The method according to claim 10, wherein the sub layer is produced with higher density than the core and said building panel is a floor panel.

12. The method according to claims 11, wherein a core material has an uneven core surface, said uneven core surface being filled with said wood fibres and the uncured binder applied on said core.

13. The method according to any of claims 1-12, wherein said sub layer further comprises cork particles.

14. The method according to any of claims 1-5 or 10-13, wherein the surface layer is selected from a homogenous solid mix of wood fibres, wear resistant particles, binders and colour pigments, a decorative paper with an overlay, and a wood veneer.

## Patentansprüche

1. Verfahren zum Herstellen einer Bauplatte (1), umfassend einen Kern (6) auf Holzfaserbasis, eine dünne Oberflächenschicht (5) und eine Unterschicht (6a) zwischen der Oberflächenschicht und dem Kern, wobei die Unterschicht Holzfasern (14) und ein Bindemittel (19) umfasst, wobei das Verfahren die Schritte umfasst zum:
• Mischen der Teilchen, umfassend Holzfasern und ein ungehärtetes Bindemittel für die Unterschicht,
• Aufbringen der Holzfasern und des ungehärteten Bindemittels als ein Pulver für die Unterschicht auf dem Kern, wobei die Unterschicht (6a) Fasern mit einer durchschnittlichen Länge (L2), die kürzer als die durchschnittliche Länge (L1) der Holzfasern in dem Kern (6) ist, umfasst,
• Aufbringen einer Oberflächenschicht auf die Holzfasern und das ungehärtete Bindemittel, wobei die Holzfasern (14) nicht miteinander verbunden sind, **dadurch gekennzeichnet, dass** es ferner den Schritt umfasst zum:
• Bringen des Kerns (6), der Oberflächenschicht (5), der Holzfasern (14) und des ungehärteten Bindemittels (19) unter einen erhöhten Druck und eine erhöhte Temperatur und Ausbilden dieser zu einer Bauplatte (1) durch Aushärten des Bindemittels (19), derart, dass die Oberflächenschicht (5) obere Abschnitte (5a) und geprägte Abschnitte (5b), die niedriger als die oberen Abschnitte sind, umfasst, wobei ein Teil der Unterschicht (6a) unter einem geprägten Abschnitt (5b) stärker zusammengedrückt ist als unter einem oberen Abschnitt (5a).

2. Verfahren zum Herstellen einer Bauplatte nach Anspruch 1, wobei die Unterschicht (6a) aus Holzfasern, die in Holzpulverfasern mechanisch geschnitten sind, ausgebildet ist.

3. Verfahren zum Herstellen einer Bauplatte nach einem der vorstehenden Ansprüche, wobei die durchschnittliche Länge der Holzfasern der Unterschicht nicht mehr als 1 mm, vorzugsweise nicht mehr als 0,5 mm beträgt.

4. Verfahren zum Herstellen einer Bauplatte nach einem der vorstehenden Ansprüche, wobei die Fasern der Unterschicht mit Harz in Trockenpulverform gemischt werden.

5. Verfahren zum Herstellen einer Bauplatte nach einem der vorstehenden Ansprüche, wobei die Unterschicht ferner Aluminiumoxid oder Steinpulver umfasst.

6. Verfahren zum Herstellen einer Bauplatte nach einem der vorstehenden Ansprüche, wobei die Oberflächenschicht eine Dicke in einem Bereich von 0,1 mm bis 3 mm aufweist.

7. Verfahren zum Herstellen einer Bauplatte nach einem der Ansprüche 1 bis 6, wobei die Oberflächenschicht eine feste Laminatoberflächenschicht ist und wobei die Unterschicht und die feste Laminatoberflächenschicht durch einen Trockenprozess ausgebildet werden, wobei die Schichten in einer Trockenform verteilt und gestreut werden.

8. Verfahren nach Anspruch 7, wobei das Streuen mit einer Vielzahl von Stationen durchgeführt wird, umfassend geprägte oder gravierte Walzen und Bürsten.

9. Verfahren nach Anspruch 8, wobei eine oder mehrere Schichten aus Trockenmaterial mit den geprägten oder gravierten Walzen und Bürsten aufgebracht werden.

10. Verfahren zum Herstellen einer Bauplatte nach einem der vorstehenden Ansprüche, wobei die Bauplatte eine Bodenplatte oder eine Wandplatte ist.

11. Verfahren nach Anspruch 10, wobei die Unterschicht mit einer höheren Dichte als der Kern produziert wird und die Bauplatte eine Bodenplatte ist.

12. Verfahren nach Anspruch 11, wobei ein Kernmaterial eine unebene Kernoberfläche aufweist, wobei die unebene Kernoberfläche mit Holzfasern gefüllt ist und das ungehärtete Bindemittel auf den Kern aufgebracht wird.

13. Verfahren nach einem der Ansprüche 1 bis 12, wobei die Unterschicht ferner Korkteilchen umfasst.

14. Verfahren nach einem der Ansprüche 1 bis 5 oder 10 bis 13, wobei die Oberflächenschicht aus einer homogenen festen Mischung aus Holzfasern, verschleißfesten Teilchen, Bindemitteln und Farbpigmenten, einem dekorativen Papier mit einem Overlay und einem Holzfurnier ausgewählt wird.

## Revendications

1. Procédé de fabrication d'un panneau de construction (1) comprenant un noyau à base de fibres de bois (6), une couche de surface mince (5) et une sous-couche (6a) entre la couche de surface et le noyau, la sous-couche comprend des fibres de bois (14) et un liant (19), dans lequel le procédé comprend les étapes consistant à :
• mélanger des particules comprenant des fibres de bois et un liant non durci pour la sous-couche,
• appliquer les fibres de bois et le liant non durci en tant que poudre pour la sous-couche sur le noyau, dans lequel la sous-couche (6a) comprend des fibres ayant une longueur moyenne (L2) qui est plus courte que la longueur moyenne (L1) des fibres de bois dans le noyau (6),
• appliquer une couche de surface sur les fibres de bois et le liant non durci, dans lequel lesdites fibres de bois (14) ne sont pas liées les unes aux autres,
**caractérisé en ce qu'**il comprend en outre l'étape consistant à :
• amener le noyau (6), la couche de surface (5), les fibres de bois (14) et le liant non durci (19) sous une pression et une température accrues et les former à un panneau de construction (1) en durcissant le liant (19) de telle sorte que la couche de surface (5) comprend des parties supérieures (5a) et des parties gaufrées (5b) inférieure aux parties supérieures, dans lequel une partie de la sous-couche (6a) est davantage comprimée sous une partie gaufrée (5b) que sous une partie supérieure (5a).

2. Procédé de fabrication d'un panneau de construction selon la revendication 1, dans lequel la sous-couche (6a) est formée de fibres de bois découpées mécaniquement en fibres de poudre de bois.

3. Procédé de fabrication d'un panneau de construction selon l'une quelconque des revendications précédentes, dans lequel la longueur moyenne desdites fibres de bois de la sous-couche n'est pas supérieure à 1 mm, de préférence d'au plus 0,5 mm.

4. Procédé de fabrication d'un panneau de construction selon l'une quelconque des revendications précédentes, dans lequel lesdites fibres de la sous-couche sont mélangées avec de la résine sous forme de poudre sèche.

5. Procédé de fabrication d'un panneau de construction selon l'une quelconque des revendications précédentes, dans lequel ladite sous-couche comprend en outre de l'oxyde d'aluminium ou de la poudre de pierre.

6. Procédé de fabrication d'un panneau de construction selon l'une quelconque des revendications précédentes, dans lequel ladite couche de surface a une épaisseur dans la plage de 0,1 mm à 3 mm.

7. Procédé de fabrication d'un panneau de construction selon l'une quelconque des revendications 1 à 6, dans lequel ladite couche de surface est une couche de surface stratifiée solide, et dans lequel ladite sous-couche et ladite couche de surface stratifiée solide sont formées par un procédé à sec, lesdites couches étant réparties et dispersées sous une forme sèche.

8. Procédé selon la revendication 7, dans lequel ladite dispersion réalisée avec une pluralité de stations, comprenant des rouleaux gaufrés ou gravés et des brosses.

9. Procédé selon la revendication 8, dans lequel une ou plusieurs couches de matériau sec sont appliquées avec lesdits rouleaux gaufrés ou gravés et brosses.

10. Procédé de fabrication d'un panneau de construction selon l'une quelconque des revendications précédentes, dans lequel ledit panneau de construction est un panneau de plancher ou un panneau de mur.

11. Procédé selon la revendication 10, dans lequel la sous-couche est produite avec une densité supérieure à celle du noyau et ledit panneau de construction est un panneau de plancher.

12. Procédé selon la revendication 11, dans lequel un matériau de noyau a une surface de noyau irrégulière, ladite surface de noyau irrégulière étant remplie desdites fibres de bois et le liant non durci appliqué sur ledit noyau.

13. Procédé selon l'une quelconque des revendications 1 à 12, dans lequel ladite sous-couche comprend en outre des particules de liège.

14. Procédé selon l'une quelconque des revendications 1 à 5 ou 10 à 13, dans lequel la couche de surface est choisie parmi un mélange solide homogène de fibres de bois, des particules résistantes à l'usure, des liants et des pigments de couleur, un papier décoratif avec un recouvrement, et un placage de bois.
